# DEMANDE DE BREVET EUROPEEN

(11) **EP 4 711 846 A1**
(43) Date de publication de la demande: **18.03.2026**
(21) Numéro de dépôt: 24200011.5
(22) Date de dépôt: 12.09.2024
(51) Int. Cl.: G03B 21/608, A63J 17/00, F21V 14/00, G02F 1/00

(54) **DISPOSITIF ET MÉTHODE DE PROJECTION DE LUMIÈRE SYNCHRONISÉE SUR UNE ONDE SONORE**

(71) Demandeur: Habegger, Sidney, 2852 Courtételle (CH)
(72) Inventeur: Habegger, Sidney, 2852 Courtételle (CH)
(74) Mandataire: P&TS SA (AG, Ltd.)

(57) **Abrégé**

La présente invention porte sur un dispositif (1) de projection lumineuse dans un environnement fluide (40), comprenant au moins une source de variation de densité (10) permettant de faire varier localement la densité de l'environnement fluide de sorte à produire au moins un front de densité, et au moins une source de projection lumineuse (20), comprenant une source de lumière, adaptée à la projection d'au moins une image (30) sur ledit au moins un front de densité (11). Le front de densité peut être une onde de compression ayant une fréquence (F11). L'image peut être émise de manière intermittente à une fréquence correspondant à la fréquence de l'onde. La présente invention couvre en outre une méthode de projection optique au moyen de ce dispositif.

## Description

### Domaine technique

La présente invention concerne un dispositif de projection lumineuse, en particulier d'images bidimensionnelles, sur une surface immatérielle telle qu'un front d'onde ou un front de densité. La projection optique peut être émise de façon intermittente de sorte à s'accorder avec la fréquence du front de densité. L'invention ici-décrite couvre en outre une méthode de projection optique sur un tel front immatériel.

### Etat de la technique

De nombreux efforts sont développés dans le cadre de l'interaction entre le son et la lumière. Le document US 2004021873 A1 décrit une méthode de mesure optique d'ondes sonores. La méthode décrite dans le document US 2010162819 A1 vise plus particulièrement à localiser une source sonore. Le document US 2022128883 A1 vise à dévier un faisceau lumineux grâce à son interaction avec des ultrasons. Le document US 2017293259 A1 décrit un moyen de focaliser un point laser dans l'air de façon variable. Le document US 2016037146 A1 décrit le moyen de projeter une onde lumineuse distordue à travers un média diffusant de sorte à produire une image dans un volume de projection.

Il y a cependant matière é développer davantage les techniques actuelles, notamment pour améliorer la qualité et/ou la variété des projections lumineuses dans l'air ambiant.

### Bref résumé de l'invention

Un but de la présente invention est de proposer un système ou un dispositif permettant de projeter une variété d'images dans l'air ambiant, en l'occurrence en l'absence d'écran matériel.

Un autre but de l'invention est d'améliorer la qualité et/ou la diversité des images projetées dans l'air ambiant, en particulier en l'absence d'écran matériel solide.

Un autre but de la présente invention est de proposer une méthode de projection d'images dans un milieu fluide, tel que l'air ambiant, de sorte qu'elle soit visible par un observateur.

Ces buts sont atteints notamment au moyen de l'invention objet des revendications indépendantes et décrite plus en détails dans les revendications qui en dépendent.

Cette solution présente notamment l'avantage par rapport à l'art antérieur de produire des images plus diversifiées et/ou de meilleure qualité que les projections actuellement effectuées sans écran solide.

### Brève description des figures

Des exemples de mise en oeuvre de l'invention sont indiqués dans la description illustrée par les figures annexées dans lesquelles :
- Figure 1 : vue schématique du dispositif selon un mode de réalisation de la présente invention,
- Figure 2 : vue schématique du dispositif selon un mode de réalisation de la présente invention,
- Figure 3 : Vue schématique détaillée de la projection d'une image sur un front de densité selon un mode de réalisation de la présente invention,
- Figure 4: vue schématique du dispositif selon un mode de réalisation de la présente invention,
- Figure 5 : vue schématique du dispositif selon un mode de réalisation de la présente invention,
- Figure 6 : Vue schématique détaillée d'une source de projection lumineuse selon un mode de réalisation de la présente invention,
- Figure 7 : Vue schématique d'un dispositif de disruption de la projection selon un mode de réalisation de la présente invention,
- Figure 8 : Vue schématique d'un dispositif de disruption de la projection selon un mode de réalisation de la présente invention.

### Exemple(s) de mode de réalisation de l'invention

Le dispositif **1** selon la présente invention est un dispositif de projection lumineuse sur une surface. A la différence des projections usuelles sur écran, où la surface de projection est fixe et matérialisée par une matière spécifique, la surface de projection utilisée dans la présente invention est définie par une différence de densité dans un espace gazeux **40,** tel que l'atmosphère. La différence de densité produit une variation de l'indice de réfraction de la lumière dans le milieu gazeux, ce qui peut permettre de rendre visible des projections lumineuses. Selon les angles d'incidences des projections lumineuses sur une surface définie par une variation de densité gazeuse, la réflexion et/ou la réfraction sur une telle surface, de la lumière émise, peut être observée. Le phénomène est observé dans le cas de mirages, des effets de miroitement ou d'ondulations d'objets lointains. La présente invention vie néanmoins à maîtriser les images projetées et leurs animations le cas échéant.

Le dispositif selon la présente invention comporte un moyen de faire varier la densité du gaz ambiant, en l'occurrence l'air ou l'atmosphère, de sorte à produire une surface réfractive et/ou réflective. Le gaz ambiant **40** présente une densité moyenne homogène **D40,** ou quasi homogène, en l'absence de perturbation. Une source de variation de densité **10** peut permettre de produire localement une densité plus élevée ou plus faible que la densité moyenne **D40.** Par exemple une source de chaleur, permettant de chauffer localement le gaz ambiant, en diminue sa densité par rapport à sa densité moyenne **D40.** Le front de densité, séparant l'air de densité moyenne **D40** de l'air de plus faible densité, peut être plus ou moins net, notamment en raison de la diffusion thermique dans l'atmosphère. Un air chaud peut néanmoins être canalisé, en étant par exemple pulsé depuis une source d'air et collecté à la fin de son parcours dans l'atmosphère, de sorte à minimiser la diffusion thermique. Une source d'air froid peut alternativement être utilisée dans le même but. Alternativement, deux courants d'air opposés, l'un étant chaud, l'autre plus froid, peuvent être utilisés pour créer à leur interface un front de variation de densité **11.**

Alternativement, une source de chaleur peut-être directement utilisée pour chauffer l'air à sa proximité, telle qu'une résistance ou une lampe infrarouge, et en diminuer sa densité. L'air chauffé localement est de préférence évacué ou refroidi de manière contrôlée pour assurer un front de densité **11** stable.

La densité obtenue à l'interface peut être qualifiée de densité de front de variation de densité **D11** ou plus simplement de densité de front. Plusieurs sources d'air chaud et/ou froid peuvent ainsi être implémentées de sorte à maintenir un front de variation de densité **11** le plus stable possible malgré le mouvement d'air. Le front de variation de densité **11** peut être désigné plus simplement de front de densité.

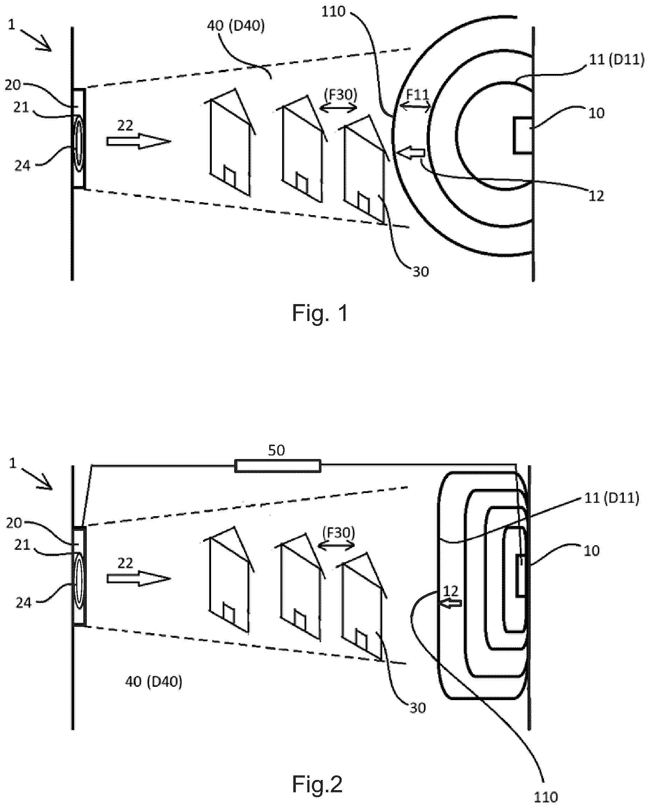

Les figures 1 à 6 montrent des exemples de réalisation où la source de variation de densité **10** est une source sonore. Le principe reste applicable pour d'autre sources de variation de densité, telles que les sources thermiques évoquées ci-dessus. La source de variation de densité **10** peut produire des surpressions par compression de l'air ambiant, typiquement au moyen d'une émission sonore. Dans ce cas, l'émission sonore produit une onde de compression qui se propage dans l'atmosphère à la vitesse du son, de l'ordre de 340 ms⁻¹, formant des fronts de compression successifs. En fonction de la fréquence sonore, les fronts de compression sont plus ou moins espacés les uns des autres. Les fronts de compressions forment ainsi plusieurs front de variation de densité **11,** ou front de densité, pouvant être mis à profit pour leur propriétés réfractives et/ou réflectives. En fonction du volume sonore, la différence de densité, directement liée à la différence de pression du gaz ambiant, peut être déterminée. Les volumes sonores les plus forts permettant les variations de densité les plus importantes. On parle également de pression acoustiques élevées. Le volume sonore peut alors être considéré pour la netteté de l'image projetée sur le front de densité **11.**

Les fréquences sonores utilisées peuvent être audibles par l'Homme, typiquement comprises entre 20 Hz et 20 KHz. Alternativement, des fréquences inférieures à 20Hz, voir inférieures à 15 Hz ou 10 Hz ou 5Hz, dans le domaine de l'infrason, non audibles pour l'Homme, peuvent avantageusement être utilisées. Le volume sonore peut ainsi être augmenté significativement sans dommages pour l'Homme, et permettre ainsi de grande variations de densité. L'utilisation de fréquences non audibles permet en outre de s'affranchir d'éventuelles interférences avec les sons ambiants. Une fréquence trop basse peut néanmoins ne pas être adaptée aux besoins de la présente invention. En effet, comme exposé plus en détail plus bas, le passage du front de densité **11** est trop fugace pour faire seul une surface de projection, de sorte que la projection s'opère sur une série de plusieurs fronts de densité successifs. Lorsqu'ils sont trop espacés les uns des autres, la projection peut s'en trouver dégradée. De préférence, la fréquence de l'onde de compression est supérieure à 0,5 Hz ou 1 Hz. Bien que les infrasons ne soient pas audibles par l'Homme, ils restent désignés, pour les besoins de la présente invention, par des sons ou des ondes sonores, leur effet étant de produire dans tous les cas un front de densité **11** ou une série de fronts de densité **11.**

Le dispositif peut comporter plus d'une source de variation de densité **10.** En l'occurrence, plusieurs sources sonores peuvent être utilisées. Dans ce cas, les ondes sonores émises par chacune des sources sonores peuvent être synchronisées de sorte à produire un front de densité **11** commun. Alternativement, plusieurs sources d'émission sonore peuvent être utilisées en décalage de phase pour produire un effet tridimensionnel lors de la projection de lumière. Dans ce cas, les différents fronts de densités **11** produits sont décalés dans le temps et dans l'espace et peuvent être utilisés comme surface de projection. Différents fronts de densité **11** peuvent par exemple être décalés d'une demie-phase ou d'1/3 de phase ou d'1/4 de phase. Cette disposition s'applique dans le cas où les différentes sources émettent un son de même fréquence. Il reste cependant possible de combiner des ondes sonores de différentes fréquences.

Alternativement ou en plus, plusieurs sources sonores peuvent être localisées à plusieurs endroits différents, de sorte à produire plusieurs séries de fronts de densité **11** distincts, pouvant avoir des directions de propagation différentes. Les fronts de densité distincts se trouvent localisés à des endroits différents. Une telle disposition peut être mise à profit pour une projection lumineuse plus riche ou pour des effets visuels tridimensionnels ou combinés.

Différentes natures de sources de variation de densité **10** peuvent être combinées. Par exemple, un premier front de densité **11** peut être obtenu de manière thermique, notamment par une source d'air chaud ou par un dispositif de chauffage de l'atmosphère localement, et un second front de densité **11** peut être produit par une ou plusieurs sources sonores.

La surface définie par le front de densité **11** est de préférence plane, ou globalement plane. Une ou plusieurs sources sonores peuvent être conçues pour émettre un front de densité **11** de géométrie carrée (figure 2) plutôt que sphérique (figure 1). L'aspect sphérique d'un front de densité **11** reste néanmoins exploitable. D'autres géométries de front de densité **11** peuvent alternativement être considérées.

Pour les besoins de la présente invention, une source sonore désigne tout dispositif susceptible d'émettre un son, en l'occurrence un son d'intensité et de fréquence contrôlée. Typiquement, un haut parleur ou un ensemble de haut parleurs peuvent être utilisés à cette fin. Différentes technologies telles que celles basées sur des électroaimants ou des piezzos ou tout autre équivalent peuvent être envisagés selon les besoins.

Le front de densité **11** peut être fixe ou globalement fixe, c'est-à-dire localisé à un endroit déterminé. Un tel front de densité peut être qualifié de permanent, dans le sens ou il persiste et peut perdurer selon les besoins. Typiquement, un front de densité **11** produit de manière thermique, comme indiqué plus haut, peut être qualifié de fixe ou permanent, ou pseudo permanent ou semi-permanent. Les termes pseudo-permanent et semi-permanent sont ici équivalents. Ils reflètent par exemple le fait que le front de densité puisse s'amoindrir avec le temps du fait de la diffusion thermique. L'amoindrissement du front de densité **11** désigne par exemple une diminution de la différence de densité de part et d'autre de ce front de densité. Dans ce cas, un front de densité **11** peut persister pour une durée variable comprise par exemple entre quelques secondes, de l'ordre de 10 à 40 secondes, et quelques minutes, tel que de 1 à 5 ou 10 minutes.

Un tel front de densité permanant ou semi-permanent, peut progresser lentement du fait de la diffusion thermique. Il est en effet possible que l'air froid se réchauffe progressivement au contact de l'air chaud, conduisant ainsi à une progression du front de densité **11.** Comme détaillé plus bas, la projection lumineuse peut être focalisée sur une plage de distance, ce qui permet de projeter les images sur un front de densité progressant dans le gaz ambiant à faible vitesse. Un tel front de densité peut alors être exploité plus longtemps malgré les effets de diffusion thermique.

Alternativement, le front de densité peut être mobile, typiquement dans une direction de propagation **12.** C'est notamment le cas d'une onde sonore se déplacement dans un fluide tel que l'air. Le front de densité est alors fugace, n'étant présent dans un espace donné qu'un faible instant, relatif à la vitesse de propagation du son. Dans ce cas, plusieurs fronts de densités **11** successifs se propagent à une fréquence de front **F11,** correspondant à la fréquence sonore utilisée par la source sonore. A un endroit donné, la densité varie en fonction de la propagation de l'onde sonore. La succession des fronts de densité **11** à un endroit donné peut être utilisée comme surface de projection. Dans ce cas, la surface de projection est intermittente. Lorsque la fréquence de l'onde sonore est suffisamment élevée, la projection reste visible. L'intermittence du front de densité 11 à un endroit donné peut alternativement être mise à profit pour des effets optiques de clignotement ou de scintillement.

Indépendamment de la nature de la source de variation de densité **10,** le front de densité **11,** comporte une ou plusieurs zone de projections **110** sur lesquelles sont imprimées les images projetées ou les effets lumineux.

La direction de propagation **12** du front de densité **11,** le cas échéant, peut être centrifuge depuis une source d'émission sonore. C'est notamment le cas lors d'ondes sphériques ou semi-sphériques. La progression peut être plus rectiligne si plusieurs sources sonores sont disposées en parallèles de sorte à produire un même front de densité **11** ou une même série de fronts de densité. Des sources sonores peuvent alternativement être conçues pour émettre une onde de compression non sphérique, par exemple carrée.

L'expression « *densité* » ou « *variation de densité* » se réfèrent à la masse volumique du fluide à l'endroit considéré, par exemple au niveau du front de densité ou de part et d'autre du front de densité **11.** La densité est corrélée à la pression de sorte qu'une variation de densité correspond à une variation de pression. Des hautes densités correspondent à des pressions élevées. Des faibles densités correspondent à des faibles pressions. Un front de densité est dans le cadre de la présente invention équivalent à un front de pression. Le front de densité ou de pression est ici compris comme une surface.

La présente invention peut être appliquée à tout fluide, qu'il soit liquide ou gazeux, pour autant que des variations locales de densité, ou de pression, puissent y être implémentées. De préférence de telles variations de densité sont implémentées à dessein et de manière contrôlée, au moins en ce qui concerne leur localisation, leur amplitude et leur fréquence le cas échéant. Les variations de densité conduisent à des variations de l'indice de réfraction du fluide, lesquelles sont exploitées aux fins de la présente invention pour produire des images ou des effets optiques. De préférence, le fluide désigne un gaz. Plus particulière le fluide désigne l'air ambiant, en l'occurrence l'air ambiant d'une pièce d'un bâtiment. Il peut également désigner l'air ambiant extérieur, par exemple relatif à un espace public citadin. L'air ambiant peut en outre désigner une couche basse de l'atmosphère, dans laquelle des figures lumineuses de grandes dimensions peuvent être projetées, de sorte à être visibles depuis des observateurs au sol. Un spectacle lumineux peut ainsi être offert à un large public.

Le dispositif de la présente invention comporte au moins une source de projection lumineuse **20.** Une telle source de projection lumineuse peut désigner un projecteur comprenant une source lumineuse et une lentille **24** ou un ensemble de lentilles permettant de projeter une image **30** à distance. La source lumineuse peut être une LED ou un ensemble de LED ou tout dispositif équivalent. La source lumineuse peut être une source laser **202.** La lumière émise peut être polarisée ou non polarisée. Un ou plusieurs filtres peuvent être considérés en combinaison avec la source lumineuse, tel que des filtres colorés, diffractifs et/ou polarisants.

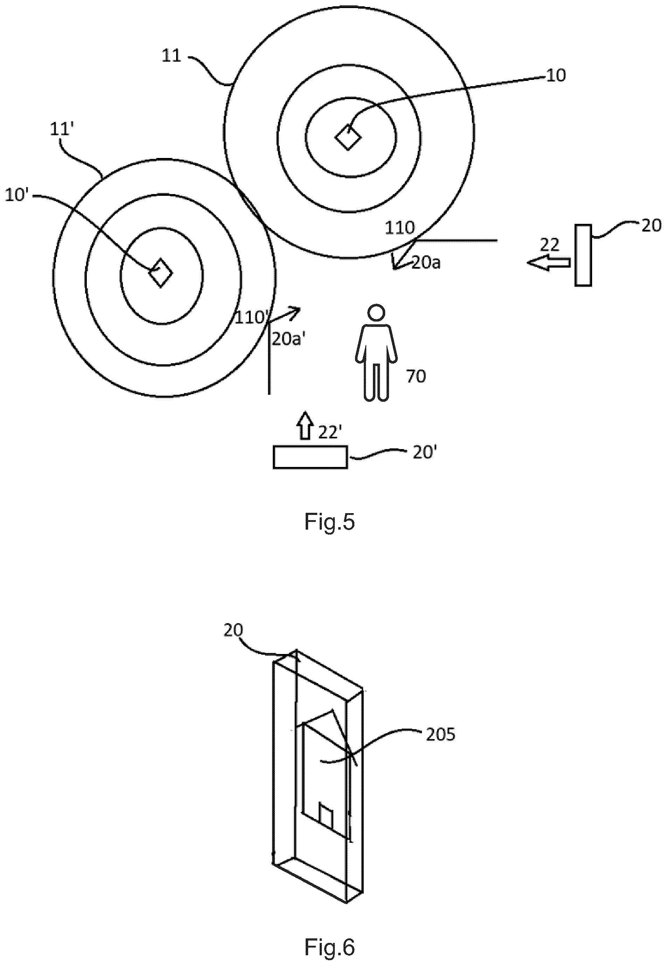

L'image **30** peut résulter d'un motif **205** (figure 6) disposé devant la lentille **24.** Un tel motif **205** peut prendre la forme d'un masque, laissant passer la lumière à des endroits requis pour produire l'image **30.** Un tel motif **205** peut être fixe ou bien animé. Dans ce dernier cas plusieurs masques peuvent être utilisés. L'image **30** est projetée selon une direction de projection **22.** L'image **30** peut ainsi représenter un motif reconnaissable tel qu'un logo commercial ou un slogan. Alternativement, l'image **30** peut désigner des motifs abstraits tel que des nuances de couleur d'intensités variables, des scintillements, ou d'autres effets optiques.

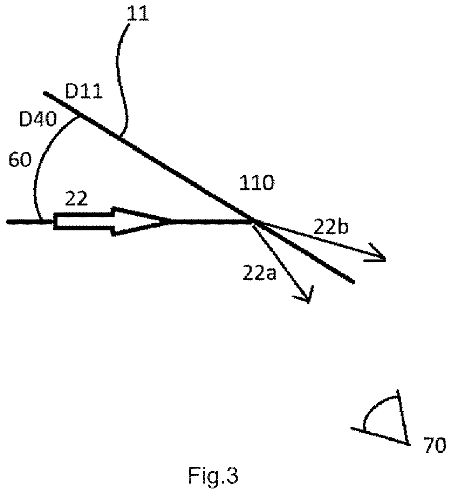

Selon un mode de réalisation, la direction de projection **22** forme avec le front de densité **11** un angle d'incidence **60,** mieux illustré à la figure 3. La lumière projetée sur le front de densité **11** est alors susceptible de produire une lumière réfléchie **22a** et/ou une lumière réfractée **22b.** L'une ou l'autre des lumières réfléchies **22a** et réfractée **22b,** peuvent être exploitées pour produire des effets optiques visibles d'un ou plusieurs observateur **70.** L'angle d'incidence est judicieusement choisi de sorte à produire au moins l'une ou l'autre des lumières réfléchie **22a** et réfractée **22b.** L'angle d'incidence **60** peut être par exemple inférieur à 40°, voire inférieur à 30° ou 20°. Il peut être compris entre 2° et 45° ou entre 5° et 40° ou entre 10 ° et 25°. Il peut alternativement être plus important, par exemple de l'ordre de 45° ou 60° ou 80° ou toute valeur intermédiaire. Il peut en l'occurrence être compris entre 40° et 89°. Selon un autre mode de réalisation l'angle d'incidence **60** peut être orthogonal au front de densité **11,** soit de 90°.

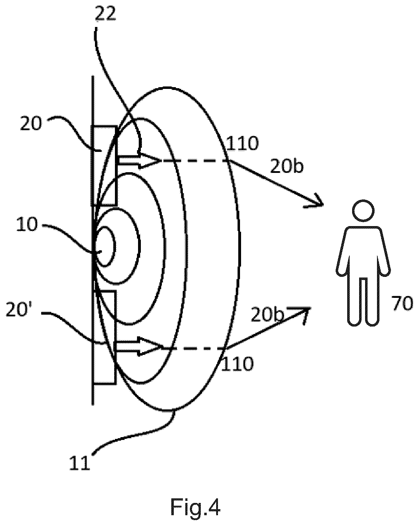

Selon un mode de réalisation, la source de projection lumineuse **20** et la source de variation de densité **10** sont disposées en vis-à-vis l'une de l'autre, formant entre elles un angle égal ou supérieur à 90°. Une telle disposition est illustrées par les figures 1, 2 et 5. Cette disposition, lorsque la source de variation de densité **10** est une source sonore, produisant une onde ayant une direction de propagation **12,** résulte en la rencontre ou le croisement des directions de propagation **12** et de projection **22.** Cet arrangement peut être privilégié pour une plus grande netteté de la projection lumineuse. La projection **22** est opposée à la progression du front de densité **11.** Cela n'exclut pas que la source de projection lumineuse **20** et la source de variation de densité **10** puissent former un angle inférieur à 90° l'une par rapport à l'autre. Dans ce cas, en particulier lorsque la source de variation de densité **10** est une source sonore, la projection **22** rejoint le front de densité **11** dans le sens de sa progression. La figure 4 donne un exemple d'une telle configuration. En l'occurrence, une source sonore **10** est coplanaire avec deux sources de projection lumineuses **20, 20'** disposées de part et d'autre de la source sonore. La direction de projection **22** suit la direction de propagation **12** et rejoint le front de densité **11** à des zones de projection **110** différentes.

La source de projection lumineuse **20** comporte au moins une lentille **24** permettant de focaliser l'image projetée **30** au niveau de la zone de projection **110,** coïncident avec un front de densité **11.**

L'image **30** peut être projetée de manière continue. Cette disposition est applicable notamment dans le cas d'un front de densité **11** permanent ou semi-permanent. La distance de focalisation peut en outre être adaptable de sorte à ajuster l'image projetée **30** sur le front de densité **11.** Cela permet d'ajuster la focale en fonction du déplacement lent du front de densité **11,** par exemple lors d'une diffusion thermique dans l'air. La projection continue d'une image **30** peut également être prévue sur une série de fronts de densité **11** mobiles, tels que ceux issus d'une source sonore. La focale peut être ciblée précisément sur la zone de projection **110** d'un seul front de densité **11,** de sorte à éviter les effets optiques relatifs aux fronts de densité connexes. Cette disposition est plus facilement applicable aux basses fréquences de front **F11.** Dans ce cas, l'image **30** projetée en continue apparaît nettement lors du passage du front de densité **11.** Elle peut se dégrader lors lorsque le front de densité **30** ne coïncide plus exactement avec la distance focale. En fonction de la fréquence de front **F11,** l'image projetée **30** peut être perçue de façon plus ou moins nette. En fonction de la fréquence de front **F1,** l'image projetée peut apparaître intermittente, e particulier aux faible fréquences.

Alternativement, la source de projection lumineuse **20** peut être adaptée pour projeter une image **30** de manière intermittente sur la zone de projection **110.** Bien qu'une telle disposition soit applicable sur un front de densité permanent ou semi-permanent, elle est particulièrement avantageuse pour projeter une image **30** sur une série de fronts de densité **11** mobiles dont la fréquence de front **F11** est connue et/ou maîtrisée. La fréquence de projection **F30** peut alors être calibrée de sorte à correspondre à la fréquence de front **F11** ou à une fraction de cette fréquence. De la sorte, l'image **30** apparaît sur la zone de projection **110** seulement lors de la présence d'un front de densité **11.** La qualité de la projection est ainsi maîtrisée. Selon un mode de réalisation, une fréquence de front **F11** peut correspondre à un son audible et la fréquence de projection **F30** peut être une fraction de cette fréquence de sorte à projeter une image **30** sur seulement certains front de densité **11.** Cette disposition permet de limiter la fréquence de projection et de simplifier l'appareillage. Cette disposition permet en outre de délivrer un message audible aux observateurs **70** tout en produisant un effet visuel sur l'onde sonore correspondante.

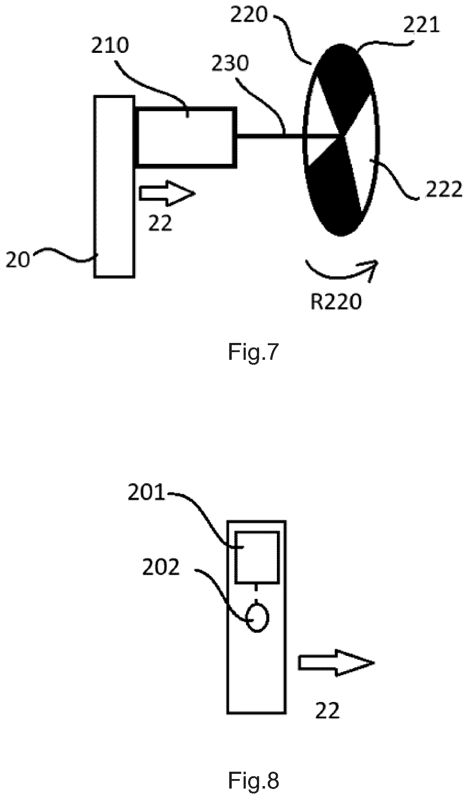

La source de projection lumineuse **20** peut à cet effet comporter un dispositif de disruption **21** permettant d'interrompre périodiquement la projection de l'image **30** et/ou de la projeter périodiquement à une fréquence de projection **F30** déterminée. La figure 7 montre un exemple de dispositif de disruption **21** comprenant un disque **220** mis en rotation autour d'un axe de rotation **230** par un moteur **210.** Le disque **220** tourne autour de l'axe de rotation dans un sens de rotation **R220.** Il comporte une alternance de secteurs opaques **221** et transparent **222.** Les secteurs opaques **221** et transparents **222** passent successivement devant la source lumineuse et occultent périodiquement la projection de l'image **30.** La largeur des secteurs opaques **221** et transparents **222** est déterminées en accord avec le temps de projection et d'interruption de l'image **30** pour une vitesse de rotation données du disque **220.** Les largeurs des secteurs opaques **221** et transparents **222** peuvent être identiques ou bien différentes. Alternativement, les largeurs des secteurs opaques **221,** et/ou des secteurs transparent **222,** peuvent varier selon leur position angulaires sur le disque 220. De la sorte, lorsque le disque tourne à vitesse constante dans le sens de rotation R222, les fréquences de projection peuvent changer et produire des effets lumineux spécifiques. Par exemple, les secteurs opaques **221** et transparents **222,** peuvent avoir une certaine largeur sur une portion angulaire du disque **220** et une largeur divisée par 2 ou plus de 2, ou bien 2 ou plus de 2 fois plus large sur un autre secteur angulaire du disque **220.** La fréquence de projection **F30** est ainsi augmentée ou diminuée d'un même facteur. Les différentes fréquences de projection **30** ainsi obtenues peuvent être des multiples de la fréquence de front **F11** du son émis, le cas échéant. Alternativement, les différentes fréquences de projection **F30** ainsi obtenues peuvent correspondre à différentes fréquences de front **F11.** La source sonore peut être modulée en conséquence de sorte que les fréquences de front **F11** correspondent aux fréquence de projection **F30.**

Le disque **220** est schématisé avec quelques secteurs opaques **221** et transparents **222.** Il peut néanmoins contenir un grand nombre de tels secteurs, comme plusieurs dizaines ou plusieurs centaines.

Alternativement ou en plus, plusieurs disques similaires peuvent être disposés sur l'axe de rotation **230,** comprenant chacun une disposition spécifique de secteurs opaques **221** et transparents **222,** et mis en rotation en fonction des fréquences de projection **F30** requises. Les disques non activés sont disposés de sorte qu'un secteur transparent **222** soient en face de la source lumineuse.

Alternativement ou en plus, la vitesse du rotation du moteur **210** peut être modulée ou ajustée de sorte à projeter une image **30** à la fréquence de projection **F30** requise.

L'utilisation de disques d'occultation tels que décrits ci-dessus autorise la projection continue d'une image **30** par la source lumineuse.

Selon un mode de réalisation alternatif, illustré par la figure 8, dispositif de disruption **21** consiste ou comprend un système électronique **201** permettant d'allumer et d'éteindre la source lumineuse à une fréquence correspondant à la fréquence de projection **F30.** L'émission de lumière est ainsi discontinue et l'image n'est projetée qu'aux instants requis. Une telle disposition est avantageuse dans le cas d'une source laser pouvant être pilotée de manière électronique.

Il n'est pas exclu que plusieurs dispositifs de disruption de nature différente soient combinés. Par exemple, un système électronique **201** permettant activation intermittente de la source lumineuse, peut être combinée à un ou plusieurs disques d'occultations **220** de sorte à pouvoir adapter les fréquences de projection **F30** sur une grande plage de valeurs.

La source de projection lumineuse **20** comporte de préférence une ou plusieurs lentilles de focalisation **24.** Une telle lentille permet de focaliser l'image projetée **30** à une distance déterminée de la source lumineuse. En l'occurrence, la lentille de focalisation **24** permet de focaliser l'image **30** sur un front de densité **11,** qu'il soit intermittent, comme dans le cas d'une onde sonore, ou permanent comme dans le cas d'une source thermique.

Selon certaines dispositions, une source de projection lumineuse 20 peut comporter plusieurs lentilles de focalisation **24** chacune permettant de focaliser l'image **30** sur différents front de densité **11.**

Selon un mode de réalisation, la source sonore émet une onde de fréquence connue et la source de projection lumineuse **20** est calibrée pour synchronisées la fréquence de projection **F30** à la fréquence de front **F11.**

Selon un autre mode de réalisation, le dispositif selon la présente invention comporte, ou est connecté à, une unité de commande **50.** L'unité de commande **50** peut être connectée ou intégrée à la source de variation de densité **11.** Elles peut être connectée à plusieurs sources de variation de densité **11** le cas échéant. L'unité de commande **50** peut être adaptée pour faire varier ou ajuster la position du front de densité, ou l'amplitude de la différence de densité de part et d'autre du front densité, ou la fréquence de front **F11** le cas échéant, via la commande de la ou des sources de variation de densité. Dans le cas où le front de densité résulte d'une variation thermique, l'unité de commande **50** est adaptée par exemple à activer ou désactiver une ou plusieurs sources de chaleur ou de froid et/ou à en adapter l'intensité de sorte qu'elles produisent plus ou moins de chaleur ou de froid.

Dans le cas où la source de variation de densité est une ou plusieurs sources sonores, l'unité de commande **50** permet de faire varier l'intensité du son émis et/ou la fréquence. Elle permet alternativement ou en plus d'activer ou de désactiver une ou plusieurs des sources sonores selon les besoins.

Selon un mode de réalisation, l'unité de commande **50** est intégrée ou connectée à au moins une source de projection lumineuse **20.** Elle peut dans ce cas ajuster la fréquence de projection **F30** de l'image, activer ou désactiver un source lumineuse, modifier les caractéristiques de l'image projetée **30,** telles que ses contours, ses couleurs, ou d'autres de ses caractéristiques. L'unité de commande **50** peut alternativement ou en plus adapter ou ajuster la fréquence de projection **F30.**

Selon un mode de réalisation, deux unités de commande distinctes peuvent être associées chacune à une source de variation de densité et une source de projection lumineuse. Les fronts de densité **11** et la projection de l'image **30** peuvent dans ce cas correspondre chacun à un programme préétabli et indépendamment pilotée par chacune des unités de commande **50.**

Alternativement, le dispositif selon la présente invention comporte une seule unité de commande **50** connectée à au moins une source de variation de densité **10** et à au moins une source de projection lumineuse **20.** De la sorte, l'unité de commande **50** est en mesure de synchroniser activement la projection de l'image **30** sur le front de densité **11.** Une telle unité de commande **50** permet par exemple de faire varier de façon synchrone les fréquences de projection **F30** et de front **F11.** Elle permet alternativement ou en plus d'activer ou de désactiver un dispositif de projection lumineuse **20** et une source de variation de densité associée, de sorte à produire un effet optique.

Selon un mode de réalisation, le dispositif selon la présente invention comporte un ou plusieurs capteurs, Des capteurs tels que des capteurs optiques peuvent être envisagés, notamment pour vérifier la qualité de l'image projetée **30.** Des capteurs optiques, actifs dans le visible ou dans l'infrarouge ou dans les ultraviolets peuvent être disposés autour des zones de projection **110.** Alternativement ou en plus, des capteurs thermiques peuvent être envisagés, notamment lorsque le front de densité est issu de variations thermiques. Les capteurs thermiques peuvent être utiles pour évaluer ou caractériser le front de densité **11.**

Selon un mode de réalisation, les données captées par un ou plusieurs capteurs sont collectée et analysées par l'unité de commande **50.** Si la qualité de l'image **30** ne correspond pas à celle escomptée, l'unité de commande **50** peut ajuster un ou plusieurs paramètres tels que la fréquence de projection **F30,** la fréquence de front **F11,** l'intensité du son émis, la température de la source de chaleur ou de froid.

Selon un mode de réalisation, l'unité de commande **50** comporte ou est connectée à un programme d'apprentissage, ou d'intelligence artificielle, de sorte à adapter au moins un des paramètres ci-dessus de manière autonome.

La présente invention couvre en outre une méthode de projection d'une ou plusieurs images **30** sur un ou plusieurs fronts de densité **11** présent dans un fluide, de préférence un gaz tel que l'air ambiant. La méthode de projection comprend une étape de produire un plusieurs front de densité **11** au moyen de l'une des sources de variations de densité **10** décrites plus haut, ou de plusieurs d'entre elles. Cette étape permet notamment de contrôler la différence de densité de front **D11** par rapport à la densité du milieu **D40.** La variation locale de densité s'accompagne d'une variation de l'indice de réfraction du milieu ambiant. Le front de densité peut être permanent, semi permanent ou mobile. Des paramètres tels que la position, la fréquence et/ou l'amplitude des fronts de densités sont contrôlés. L'étape de produire un ou plusieurs front de densité **11** peut inclure l'étape de déterminer et/ou contrôler la fréquence de front **F11.**

La présente méthode comprend l'étape de projeter une image **30** sur au moins un front de densité **11.** L'image peut être projetée de manière continue ou bien intermittente. L'image peut être de toute nature, elle peut désigner un effet optique tel qu'un scintillement, un éclairement, un effet de réverbération, des nuances de couleurs. Elles peut avoir alternativement ou en plus des contours définis. Elles peut être fixe, c'est-à-dire statique, ou bien animée.

La présente méthode peut comporter une étape de focaliser l'image projetée **30** sur au moins un front de densité **11.** La focalisation peut être obtenue par une ou plusieurs lentilles optiques adaptées. De la sorte, l'image est visible d'un observateur **70** sans qu'une surface de projection ne lui soit visible.

La présente méthode peut comporter une étape de capter l'image projetée **30** au moyen d'un ou plusieurs capteurs optiques. Selon la qualité de l'image **30,** la focalisation de l'image **30** peut être ajustée. L'ajustement de la focalisation peut être fait manuellement. Alternativement, la focalisation est ajustée de manière automatique, par exemple au moyen d'une unité de commande **50,** avec l'aide d'un programme d'intelligence artificielle ou non.

La présente méthode comporte une étape d'activer et désactiver la projection de l'image à une fréquence de projection **F30** contrôlée. Le caractère intermittent de la projection peut être obtenu par dispositif de disruption décrit ci-dessus, incluant un système de contrôle électronique et/ou un disque ajouré, ou par tout autre système adéquat.

La méthode peut comprendre l'étape de synchroniser la fréquence de projection **F30** à la fréquence de front **F11** le cas échéant.

La présente méthode peut comprendre l'étape d'adapter l'image projetée **30** à une séquence sonore audible par l'Homme.

### Numéros de référence employés sur les figures

- 1: Dispositif de projection
- 11: Front de densité
- 12: Direction de propagation
- 21: Dispositif de disruption
- 22: Direction de Projection
- 22a: Lumière réfléchie
- 22b: Lumière réfractée
- 24: Lentille de projection
- 30: Image projetée
- 40: Environnement gazeux
- 50: Unité de commande
- 70: Observateur
- 110: Zone de projection
- 201: Système électronique
- 202: Source laser
- 210: Moteur
- 230: Axe de rotation
- 220: Disque
- 221: Secteur opaque
- 222: Secteur transparent
- R220: Sens de rotation
- D11: Densité de front
- D40: Densité de l'environnement gazeux
- F11: Fréquence de front
- F30: Fréquence de projection

## Revendications

1. Dispositif (1) de projection lumineuse dans un environnement fluide (40) de densité d'environnement (D40), comprenant :
- au moins une source de variation de densité (10) adaptée pour faire varier localement la densité de l'environnement fluide de sorte à produire au moins un front de densité (11) ayant une densité de front (D11), et
- au moins une source de projection lumineuse (20), comprenant une source de lumière, adaptée à la projection d'au moins une image (30) sur ledit au moins un front de densité (11).

2. Dispositif selon la revendication 1, ladite au moins une source de variation de densité étant sélectionnée parmi une ou plusieurs sources sonores, une ou plusieurs sources de chaleur ou de froid, ou une combinaison de sources sonore et de chaleur ou de froid.

3. Dispositif selon l'une des revendications 1 et 2, ladite au moins une source de projection lumineuse comprenant une lentille de focalisation (24) adaptée à focaliser l'image projetée (30) sur ledit au moins un front de densité (11).

4. Dispositif selon l'une des revendications 1 à 3, comprenant en outre un dispositif de disruption (21) de la projection adapté pour produire une projection intermittente de l'image (30) sur ledit au moins un front de densité (11).

5. Dispositif selon la revendication 4, ledit dispositif de disruption comprenant un système électronique d'activation et de désactivation de la source de lumière et/ou un disque rotatif (220) pourvu de secteurs opaques (221) et transparents (222).

6. Dispositif selon l'une des revendications 1 à 5, ladite au moins une source de variation de densité comprenant au moins une source sonore et ledit front de densité étant une onde de compression ayant une fréquence de front (F11), ladite au moins une source de projection lumineuse (20) étant adaptée à projeter une image intermittente à une fréquence de projection (F30), la fréquence de front F11 étant identique ou un multiple de la fréquence de projection (F30).

7. Dispositif selon l'une des revendications 1 à 6 comprenant en outre une unité de commande (50) permettant de contrôler ladite au moins une source de variation de densité, ladite au moins une source de projection lumineuse ou l'ensemble des au moins une source de variation de densité et de projection lumineuse.

8. Dispositif selon l'une des revendications 1 à 7, comprenant en outre un ou plusieurs capteurs adaptés à déterminer la position ou les caractéristiques du front de densité (11) et/ou la qualité de l'image projetée (30).

9. Méthode de projection d'au moins une image (30) sur un ou plusieurs fronts de densité (11) au moyen d'un dispositif selon l'une des revendications 1 à 8 comprenant les étapes de :
- produire un plusieurs fronts de densité (11) au moyen d'une ou plusieurs sources de variations de densité (10), et
- projeter ladite au moins une image (30) sur lesdits un ou plusieurs fronts de densité (11).

10. Méthode selon la revendication 9, comprenant en outre l'étape de focaliser ladite au moins une image (30) sur lesdits un ou plusieurs front de densité (11) au moyen d'une lentille de focalisation.

11. Méthode selon l'une des revendications 9 et 10, comprenant en outre l'étape de surveiller ladite au moins une image (30) ou lesdits un ou plusieurs fronts de densité (11) au moyen d'au moins un capteur tels qu'un capteur optique ou un capteur thermique et d'ajuster la focalisation et ou la position du front de densité dans l'espace ambiant.

12. Méthode selon l'une des revendications 9 à 11, comprenant en outre l'activation et la désactivation de la projection de ladite au moins une image à une fréquence de projection (F30) contrôlée.

13. Méthode selon l'une des revendications 9 à 12, dans laquelle produire un plusieurs fronts de densité (11) comprend la production d'une onde de compression au moyen d'une ou plusieurs sources sonores, selon laquelle une série de fronts de densité (11) se succède à une fréquence de front (F11).

14. Méthode selon l'une des revendications 12 et 13, comprenant en outre l'étape de synchroniser la fréquence de projection (F30) avec la fréquence de front (F11) au moyen d'une unité de commande (50)
